# EUROPEAN PATENT APPLICATION

(11) **EP 1 932 684 A1**
(43) Date of publication of application: **18.06.2008**
(21) Application number: 07023991.8
(22) Date of filing: 11.12.2007
(51) Int. Cl.: B60B 33/02, B62B 7/04

(54) **Direction control mechanism for wheel of a baby stroller**

(30) Priority: 12.12.2006 CN 200620154636 U
(71) Applicant: Lerado (Zhong Shan) Industrial Co., Ltd., Zhong Shan City Guangdong (CN)
(72) Inventor: Chou, Fu-Peng, Taichung City (TW)
(74) Representative: TER MEER - STEINMEISTER & PARTNER GbR

(57) **Abstract**

A direction control mechanism for wheel (33) of a baby stroller, can be locked and unlocked the castoring simply by stepping down a pedal (51) thereupon repeatedly. The direction control mechanism comprises a vertical pivotal base (2), a castor assembly (3), a latch assembly (4) and a castor lock assembly (5). The vertical pivotal base (2) connected to a leg frame (100) of the stroller, the vertical pivotal base (2) having a first vertical bore (21) and a second vertical bore (22) both are parallel to each other; the castor assembly (3) carried a wheel (33) and detachably connected with the vertical pivotal base (2) by the latch assembly (4), the castor assembly (3) having a swirl base (31) formed with a positioning portion; the castor lock assembly (5) including a pedal (51), a driving unit (52), and a latch pin (53), slidably received within the second vertical bore (22) for driving a latch pin (53) thereof to engage with the castor assembly (3) at the positioning portion, so as to selectively lock or unlock the castor assembly (3) relative to the vertical pivotal base (2).

## Description

### BACKGROUND OF THE INVENTION

### FIELD OF THE INVENTION

This invention relates to a direction control mechanism for controlling the castoring of a stroller wheel. More specifically, this invention relates to a direction control mechanism which can be adapted to lock and unlock a castor assembly by simply step down a pedal repeatedly.

### DESCRIPTION OF THE RELATED ART

Castor wheels are commonly used as the front wheels of a stroller for facilitating the moving and steering and labor saving while being in use. Typically, the front wheels of a stroller may selectively either locked in a fixed direction or unlocked for freely swiveling around.

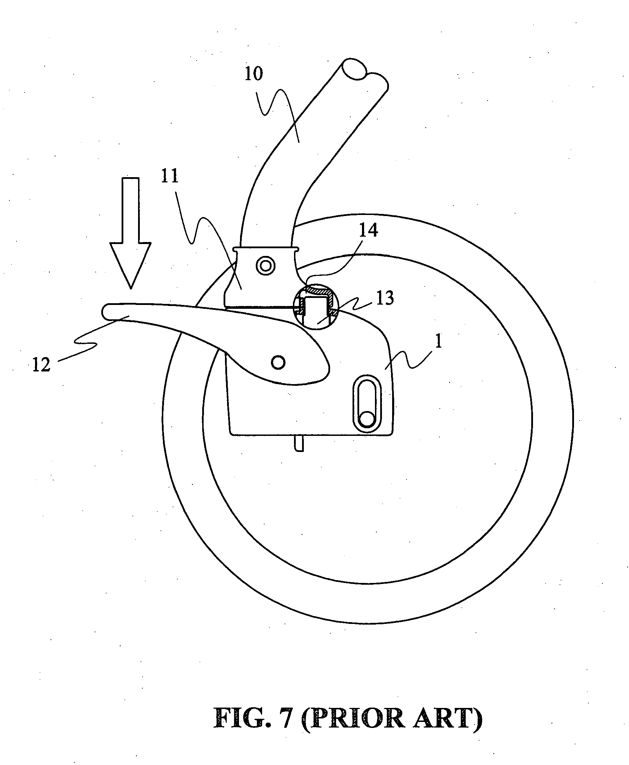

Conventional castor assembly as shown in FIG. 7 is mounted on a front leg tube 10. The castor may comprise a pivotal base 11, and a castor body 1 swivellably connected to the pivotal base 11 thereof. A pedal 12 with long arms being pivoted with the castor body 1 that may use to drive a lock pin 13 to move either upwardly or downwardly to engage or disengage a positioning orifice 14 formed on the underside of the pivotal base 11, so as to lock or unlock the castor body 1 relative to the pivotal base 11.

When a user wants to lock the castor in a fixed direction, just need to step down the pedal 12 to drive the lock pin 13 to engage in the positioning orifice 14; however, when the user wants to unlock the stroller, shall need to lift the pedal 12 by hand or by the shoe tip, this may dirty the hand or damage the shoe face.

### SUMMARY OF THE INVENTION

The present invention provides a direction control mechanism, which can lock and unlock a castor assembly by simply to step down a pedal repeatedly. The direction control mechanism according to the present invention may comprise a vertical pivotal base, a castor assembly, a latch assembly and a castor lock assembly.

The vertical pivotal base connects with the leg frame of a stroller, having a first vertical bore and a second vertical bore both are parallel to each other.

The castor assembly carries a wheel and detachably connects with the vertical pivotal base by the latch assembly, having a swirl base formed with a positioning portion on upside thereof.

The castor lock assemble includes at least a pedal, a driving unit, and a latch pin, slidably received within the second vertical bore for driving the latch pin to engage in or disengage from the positioning portion, so as to selectively lock or unlock the castor assembly relative to the vertical pivotal base.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention are incorporated in and constitute a part of this specification, illustrate embodiments of the invention and together with the description serve to explain the principles of the invention. In the drawings:

FIG. 1 is a perspective view of a pair of direction control mechanism of the present invention mounted on either side of a leg tube of a baby stroller.

FIG. 2 is an exploded perspective view of the direction control mechanism of the invention.

FIG. 3 is a cross-sectional view of a pivotal base of the direction control mechanism.

FIG. 4 is an exploded perspective view of a driving unit of the direction control mechanism.

FIG. 5 is a schematic view showing the operation of the driving unit of the direction control mechanism.

FIG. 6 is a schematic cross-sectional view of the direction control mechanism.

FIG. 7 is a schematic side view of a conventional stroller.

### DETAILED DESCRIPTION OF THE PREFERRED EMBODIMENTS

Reference will now be made in detail to the preferred embodiments of the present invention, examples of which are illustrated in the accompanying drawings.

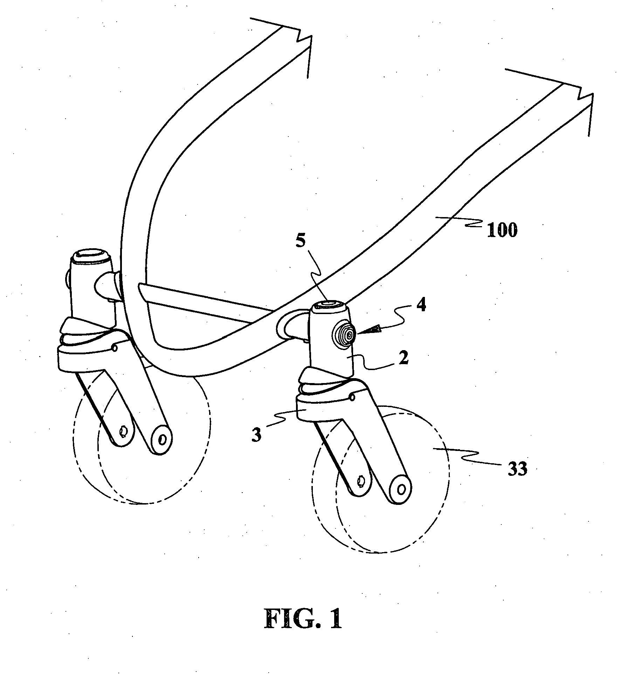

Referring to FIG. 1, an embodiment of the direction control mechanism for wheel of a baby stroller according to the present invention comprises a vertical pivotal base 2, a castor assembly 3, latch assembly 4 and a castor lock assembly 5.

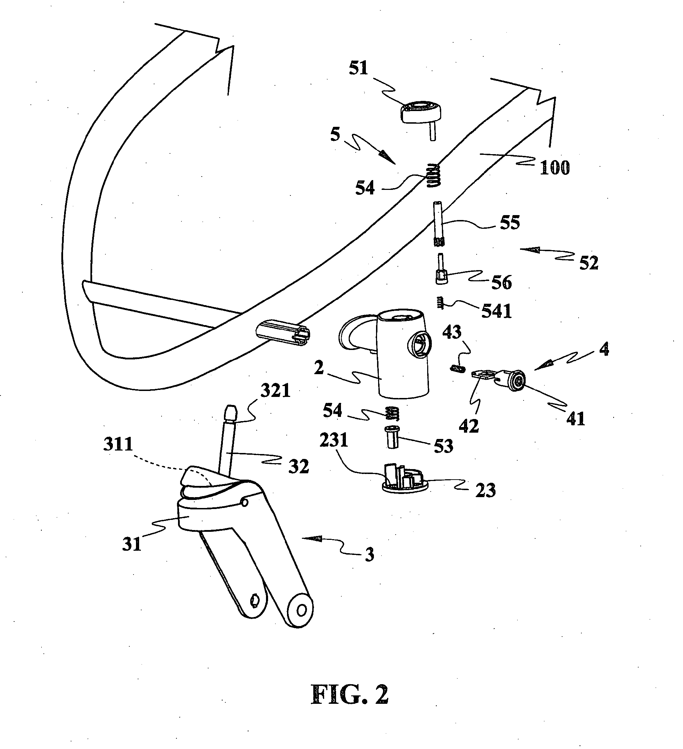

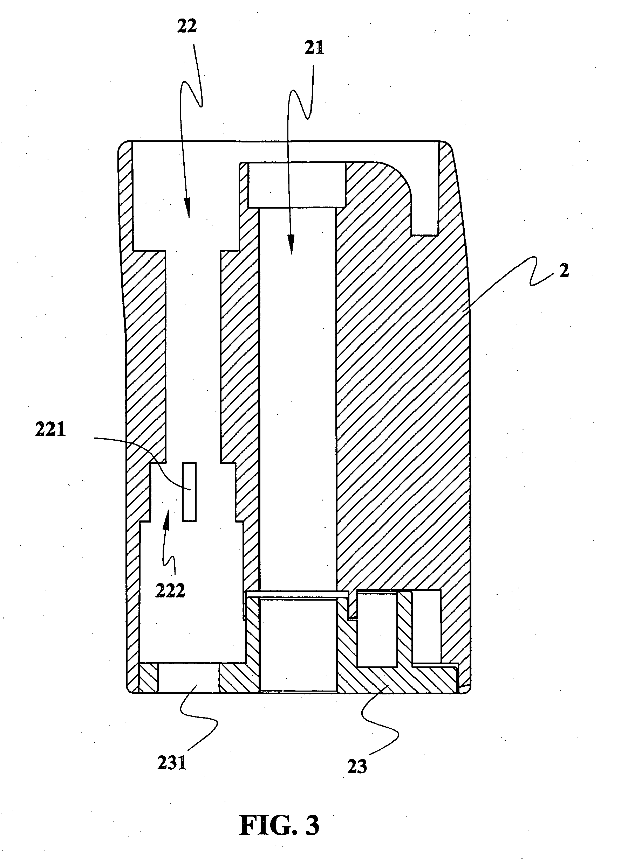

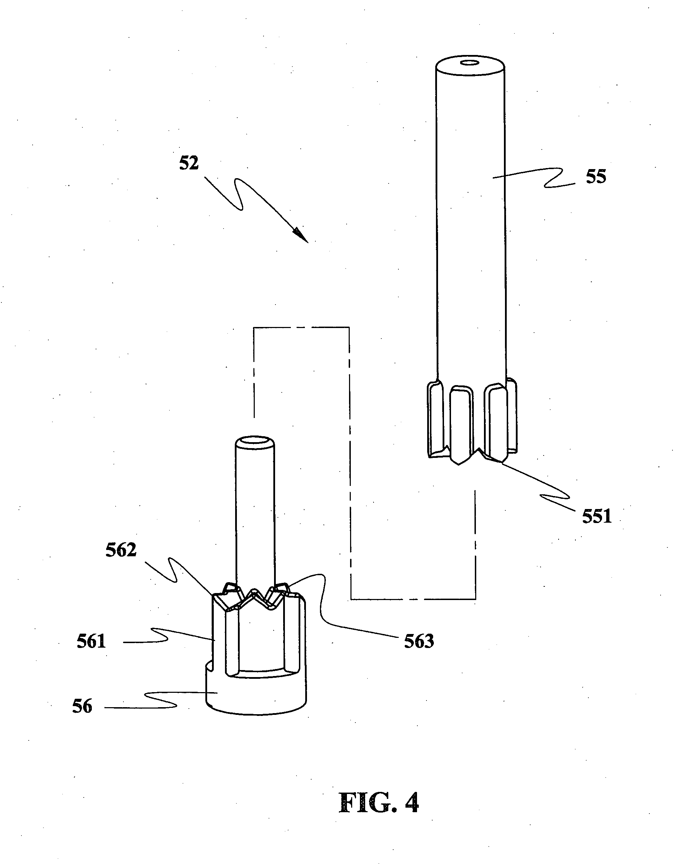

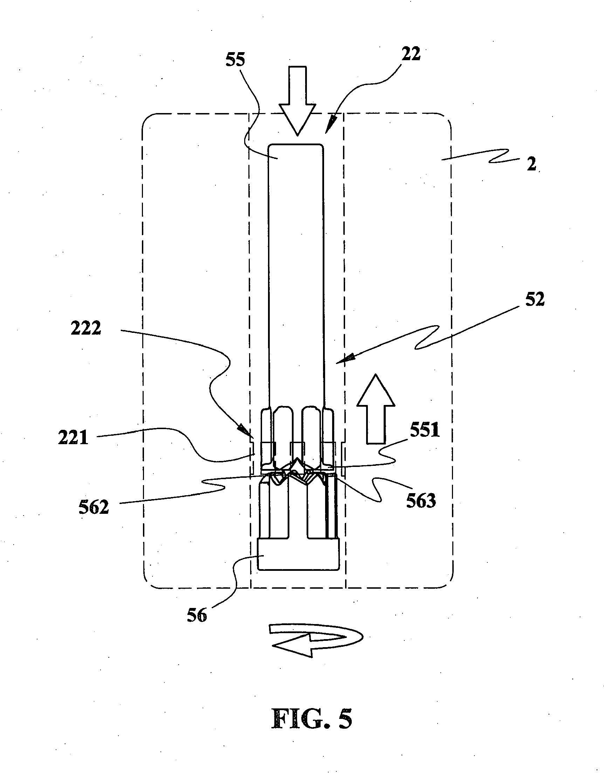

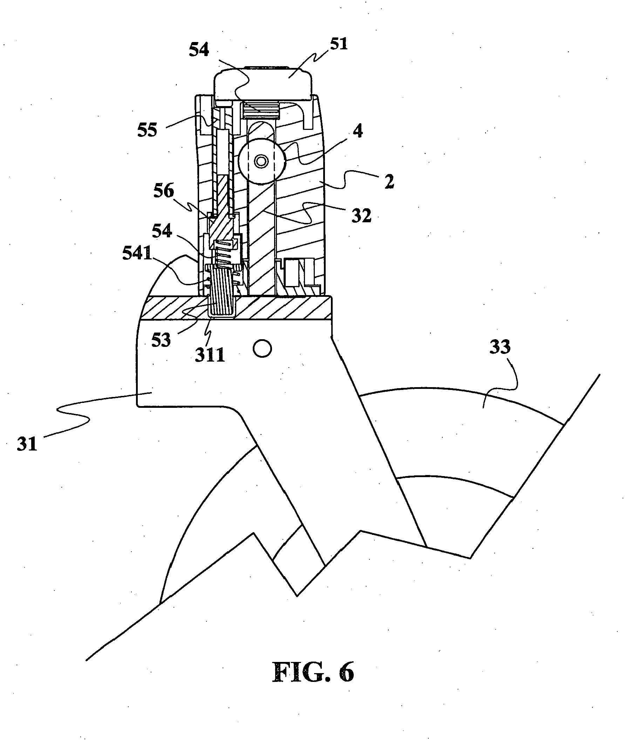

Further referring FIGS. 2 to 6, the vertical pivotal base 2 is connected to the leg frame 100 of a stroller, having a first vertical bore 21 and a second vertical bore 22 both are parallel to each other.

The castor assembly 3 carries a wheel 33 and detachably connected with the vertical pivotal base 2, having a swirl base 31 and a stem 32. The upper portion of the stem 32 is formed at least an annular groove 321 for releaseably retaining in the first vertical bore 21 by a latch assembly 4.

The swirl base 31 may further be formed with a positioning portion 311, such as an indent, a hole, a slot, or the like, for releaseably and selectively engaging with a latch pin 53 to lock or unlock relative to the vertical pivotal base 2.

The vertical pivotal base 2 may further include an end cap 23 connected to the lower end thereof for retaining the driving unit 52 and the latch pin 53 within the second vertical bore 22. The end cap 23 has an orifice 231 that permits the latch pin 53 to pass therethrough downwardly.

The latch assembly includes a pushbutton 41, a latch member 42 and a resilient member 43 for laterally engaging with the stem 32 at the annual groove 321. when the stem 32 inserted in the first vertical bore 21, the resilient member 43 biases the latch member 42 to engage in the annual groove 321 thereby to swivellably connect the swivel base 31 to the vertical pivotal base 2. However, when the pushbutton 41 is depressed against the resilient member 43, the latch member 42 is driven to disengage from the annual groove 321; this permits the swivel base 31 depart from the vertical pivotal base 2.

The castor lock assembly 5 comprises a pedal 51, a driving unit 52, a latch pin 53, a resilient member 54, a driving rod 55, a driven slider 56 and a resilient 541 for biasing the latch pin upwardly to disengage from the positioning portion 311.

The driving unit 52 is driven by the pedal 51 and slidably received within the second vertical bore 22 for driving the latch pin 53 thereof adapted to lock and unlock the castor assembly 3 so as to selectively position the swivel base 31 relative to the vertical pivotal base 2.

The driving unit 52 includes a driving rod 55 and a driven slider 56. The driving rod 55 has an upper end abutted and driven by the pedal 51, and a lower end formed with a central hole (not shown) and a ratcheted end portion 551.

The driven slider 56 has an upper end slidably received within the central hole, a plurality of radially protruded ribs 561 each has an abutting portion 562 formed with a plurality of oblique faces 563 and a lower end for driving the latch pin 53.

The resilient member 54 may be a compression spring received within the second vertical bore 22 and disposed between the driving rod 55 and the driven slider 56, this biasing the driving rod 55 and the driven slider 56 in opposite directions. While the pedal 51 is stepped downwardly, the resilient member 54 is compressed, and the ratcheted end portion 551 slidably abuts the oblique faces 563, this makes the driven slider 56 moving downwardly and rotating in a predetermined angle.

The second vertical bore 22 may be formed with a plurality of dividing ribs 221 and guiding channels 222. While the pedal is stepped downwardly, the driven slider 56 is rotated and moved downwardly to push the latch pin 53 to engage in the positioning portion 311, the lower end of the dividing ribs 221 abuts the upper end of the radially protruded rib 561 thereby to keep the latch pin 53 retained in the positioning portion 311.

While the pedal is stepped downwardly again, the driving rod 55 is driven to move downwardly and drives the driven slider 56 to rotate in a predetermined angle, this made the radially protruded rib to be rotated and shifted to align with the guiding channels 222, the resilient member 541 biases the driven slider 56 upwardly to move through the guiding channels 222 thereby to permit the latch pin 53 disengage from the positioning portion 311. By this way, the direction control mechanism can lock and unlock a castor assembly by imply stepping down a pedal repeatedly.

It will be apparent to those skilled in the art that various modifications and variations can be made in the infant carrier, stroller, and base system of the present invention without departing from the spirit or scope of the invention. Thus, it is intended that the present invention cover the modifications and variations of this invention provided they come within the scope of the appended claims and their equivalents.

## Claims

1. A direction control mechanism for wheel of a baby stroller, comprising:
a vertical pivotal base connected to a leg frame of the stroller, the vertical pivotal base having a first vertical bore and a second vertical bore both are parallel to each other;
a castor assembly carried a wheel and detachably connected with the vertical pivotal base, the castor assembly having a swirl base formed with a positioning portion; and
a castor lock assembly slidably received within the second vertical bore for driving a latch pin thereof to engage with the castor assembly at the positioning portion for selectively positioning the castor assembly relative to the vertical pivotal base.

2. The direction control mechanism of claim 1, wherein the castor lock assembly comprising:
a pedal operatively sliding on the vertical pivotal base; and
a driving unit driven by the pedal for selectively driving the latch pin into the positioning portion to lock the castor assembly.

3. The direction control mechanism of claim 1, wherein the castor assembly having a stem formed with an annual groove, the stem inserted in the first vertical bore and detachably retained therein by a latch assembly.

4. The direction control mechanism of claim 3, wherein the latch assembly includes a latch member for laterally engaging with the stem at the annual groove.

5. The direction control mechanism of claim 3, wherein the latch assembly includes a latch member for engaging with the stem, a resilient member for biasing the latch member and a pushbutton for pushing the latch member either to engage or disengage with the stem.

6. The direction control mechanism of claim 2, wherein the vertical pivotal base further includes an end cap connected to the lower end thereof for retaining the driving unit and the latch pin within the second vertical bore.

7. The direction control mechanism of claim 6 further includes a resilient member for biasing the latch pin upwardly so as to unlock the castor assembly.

8. The direction control mechanism of claim 2, wherein the driving unit includes
a driving rod, having an upper end abutted by the pedal, and a lower end formed with a central hole and a ratcheted end portion at the end thereof;
driven slider, having an upper end slidably received within the central hole, a plurality of radially protruded ribs each has an abutting portion formed with a plurality of oblique faces and a lower end for driving the latch pin; and
a resilient member received within the second vertical bore for biasing the driven slider and the driving rod in opposite directions.

9. The direction control mechanism of claim 8, wherein the resilient member is a compression spring.

10. The direction control mechanism of claim 8, wherein the second vertical bore is formed with a plurality of dividing ribs for retaining the driven slider in a lower position by stopping the radially protruded rib moving upwardly.

11. The direction control mechanism of claim 9, wherein the guiding channels permit the radially protruded ribs passing therethrough and moving upwardly.

12. The direction control mechanism of claim 9, wherein the radially protruded ribs abutted at the lower end of the dividing ribs when being rotated by the ratcheted end portion, thereby to keep the latch pin retained and engaged in the positioning portion.
